# EUROPÄISCHE PATENTANMELDUNG

(11) **EP 1 653 249 A1**
(43) Veröffentlichungstag der Anmeldung: **03.05.2006**
(21) Anmeldenummer: 05023123.2
(22) Anmeldetag: 24.10.2005
(51) Int. Cl.: G01S 13/00, F41G 7/22, G01S 13/87, G01S 13/88, G01S 7/41, F41G 7/00

(54) **Verfahren und Vorrichtung zur Detektion von sich nähernden Objekten**

(30) Priorität: 30.10.2004 DE 102004052750
(71) Anmelder: LFK-Lenkflugkörpersysteme GmbH, 85716 Unterschleissheim (DE)
(72) Erfinder: Mecklenbrauck, Wilhelm, Dr., 89075 Ulm (DE); Weiss, Georg, 85110 Kipfenberg (DE)
(74) Vertreter: Hummel, Adam

(57) **Zusammenfassung**

Bei einem Verfahren zur Detektion von sich nähernden Objekten, bei dem mit wenigstens einem Sensor vom sich nähernden Objekt reflektierte elektromagnetische Strahlung empfangen und ausgewertet wird, wird vorgeschlagen, dass die von einem Radar-Sender auf das Objekt gerichtete Strahlung erfasst wird, dass die vom Objekt reflektierte Strahlung desselben Senders identifiziert und mit Hilfe der aufgrund des Dopplereffektes auftretenden Frequenzverschiebung Messwerte zur Peilmessung bzw. Zielrichtungsmessung gewonnen werden.

Das Verfahren und der vorgeschlagene Sensor erlauben es, auf passive Weise jede Art von sich nähernden Objekten, auch manövrierende Objekte, bei jedem Wetter aufzufassen. Er nutzt dazu die Strahlung von kooperativen oder nichtkooperativen Sendern aus, die von den sich nähernden Objekten reflektiert wird.

## Beschreibung

Die Erfindung betrifft ein Verfahren zur Detektion von sich nähernden Objekten, bei dem mit wenigstens einem Sensor vom sich nähernden Objekt reflektierte elektromagnetische Strahlung empfangen und ausgewertet wird, und eine Vorrichtung zu dessen Durchführung.

Um mit Lenkflugkörpern (LFKs) einen präzisen Treffer zu erzielen, werden diese mit Zielsuchköpfen (ZSKs) ausgerüstet. Dies macht es auch nicht notwendig, LFK und Ziel während der gesamten Bekämpfungsdauer zu verfolgen. Solche ZSKs können je nach Anwendung aktiv (Strahlung emittierend) oder passiv sein. Weiterhin können sie aus einem (Mono Mode) oder mehreren Sensoren (Multi-Mode) bestehen. Passive ZSKs haben den Vorteil, dass sie sich dem Gegner nicht durch eigene Strahlungsemission verraten. Andererseits benötigen sie, wie jeder Empfänger, Strahlung vom Ziel, um dieses aufzufassen.

Multi-Mode-ZSKs, im einfachsten Fall Dual Mode-ZSKs, haben den Vorteil, dass sich die aufeinander abgestimmten Sensoren ergänzen, so dass der Gesamt-ZSK die geforderten Leistungen erbringt, ohne dass seine einzelnen Sensoren bis an die Grenzen ihrer Fähigkeiten getrieben werden müssen und so preiswert und robust bleiben.

Es gibt nun Dual Mode-ZSKs aus AR- (Anti-Radiation-) und IR-Sensor oder aus AR- und Radar-Sensor, bei denen der AR-Sensor strahlende Ziele schon bei großen Abständen erfasst, den LFK während der Marschphase führt und den Zweitsensor (IR- oder Radar- Sensor) auf das Ziel einweist. Der Zweitsensor führt dann den Endanflug durch. Dies ist bei (festen) Bodenzielen oder (nahezu festen) Schiffszielen der Fall, aber auch bei angreifenden Flugkörpern. Im letztgenannten Fall ist die korrekte Funktion des AR-Sensors wegen der kurzen Annäherungsdauer besonders wichtig. Deshalb versuchen die angreifenden Flugkörper dessen Funktion dadurch zu stören oder zu verhindern, dass sie nur kurzzeitig Strahlung aussenden oder passive ZSKs verwenden, so dass der AR-Sensor sie nicht auffassen kann.

Es ist das Ziel der Erfindung, diese Lücke zu schließen und ein Verfahren und einen geeigneten Sensor zu seiner Durchführung zu schaffen.

Dies wird gemäß der Erfindung dadurch erreicht, dass von einem Radar-Sender, z.B. dem eines Überwachungsradars, eines Zielverfolgungsradars oder eines Navigationsradars, auf das Objekt gerichtete Strahlung erfasst wird, dass die vom Objekt reflektierte Strahlung desselben Senders identifiziert und mit Hilfe der aufgrund des Dopplereffektes auftretenden Frequenzverschiebung Messwerte zur Peilmessung bzw. Zielrichtungsmessung gewonnen werden.

Dazu wird gemäß der Erfindung die Verwendung eines "BSD-Moduls" in Ergänzung eines AR-Sensors oder eines eigenständigen BSD-Sensors vorgeschlagen.

Das BSD-(Bistatische Doppler-) Modul kann die Erweiterung eines AR-Sensors sein. Dann verwendet es die HF-Stufen gemeinsam mit dem AR-Sensor. Der eigenständige BSD-Sensor kann das BSD-Modul, erweitert um eigene HF-Stufen sein.

Im Folgenden seien beide BSD-Sensor genannt.

Der BSD-Sensor erlaubt es, auf passive Weise jede Art von sich nähernden Objekten, auch manövrierende Objekte, bei jedem Wetter aufzufassen. Er nutzt dazu die Strahlung von kooperativen oder nicht-kooperativen Sendern aus, die von den sich nähernden Objekten reflektiert wird. Insbesondere wird die Strahlung von Sendern, die andere Aufgaben durchführen, dabei aber auch die interessierenden, sich nähernden Objekte anstrahlen, ausgenutzt, um diese Objekte aufzufassen. Die Sender müssen diese Objekte dazu auch nicht selbst auffassen und gezielt mit Strahlung beaufschlagen.

Ein Beispiel soll das vorgeschlagene Verfahren erläutern:

Ein Marine-Schiff stellt fest, dass es von tieffliegenden Flugkörpern angegriffen wird. Es kann sich nun mit Hilfe geeigneter Abwehrflugkörper (FKs) mit BSD-Sensor dadurch verteidigen, dass es in Richtung der Angreifer solche FKs ev. mit Vorinformation startet. Es braucht dann diese FKs nicht mit weiterer Zielinformation zu versorgen ("Fire- and-Forget-FKs"), ist also davon entlastet, wenn nur gewährleistet ist, dass die Angreifer "genügend häufig" von (eigenen) Sendern angestrahlt werden. Dies ist in einer solchen Situation immer der Fall.

Ein solcher BSD-Sensor nutzt die eher zufällige Bestrahlung eines angreifenden Flugkörpers durch ein Radar aus, um diesen Flugkörper aufzufassen. Dazu empfängt der Sensor die direkte Strahlung des Radars und ist damit in der Lage, die zugehörige vom angreifenden Flugkörper reflektierte Strahlung zu identifizieren und z.B. für eine Peilmessung /Zielrichtungsmessung auszuwerten. Dabei wird ausgenutzt, dass diese reflektierte Strahlung wegen des Dopplereffektes in der Frequenz verschoben ist. Das Verfahren ist außerdem ein bistatisches Radarverfahren, da Sender und Empfänger voneinander getrennt sind. Der Sensor wird deshalb Bistatischer Doppler-Sensor, abgekürzt BSD-Sensor genannt.

Der BSD-Sensor kombiniert also die bekannten Verfahren "bistatischer Empfang (kooperativ und nicht-kooperativ)" und "Doppler-Analyse" in neuer Weise und erzielt dadurch eine bisher nicht bekannte Leistungsfähigkeit, nämlich auf passive Weise ohne Eigenverrat jede Art von sich nähernden Objekten bei jedem Wetter auffassen zu können.

Der BSD-Sensor kann in heutiger Technologie aufgebaut werden. Er ist aber auch erst durch die heutige Technologie der "hochratigen A/D-Wandlung" und "großer Prozessorleistung in kleinem Volumen" möglich.

Als besondere Vorteile des vorgeschlagenen Sensors können angeführt werden:
- Der BSD-Senor ist passiv und wetterunabhängig.
- Er kann ohne Verzug arbeiten.
- Er besitzt ein Antennensystem mit großem Gesichtsfeld.
- Er kann jede Art von angreifenden Flugkörpern/Flugobjekten auffassen, seien sie mit aktivem, passivem oder ohne ZSK ausgerüstet.
- Er kann selbst in Ruhe sein oder in einem LFK als Sensor eines ZSK untergebracht sein.
- Der BSD-Sensor nutzt die Strahlung von vorhandenen Radaren aus, er braucht keinen eigenen Zielbeleuchter wie ihn halbaktive Radar-ZSKs benötigen, kann aber auch gezielte Beleuchtung ausnutzen.
- Im Vergleich zu Data-Link-Systemen benötigt er keine zusätzliche Geräteausstattung und stellt die Zielinformation nahezu verzugslos bereit.
- Er kann in heute vorhandener Technologie aufgebaut werden.

## Patentansprüche

1. Verfahren zur Detektion von sich nähernden Objekten, bei dem mit wenigstens einem Sensor vom sich nähernden Objekt reflektierte elektromagnetische Strahlung empfangen und ausgewertet wird, **dadurch gekennzeichnet, dass**
- von einem Radar-Sender auf das Objekt gerichtete Strahlung erfasst wird,
- dass die vom Objekt reflektierte Strahlung desselben Senders identifiziert und
- mit Hilfe der aufgrund des Dopplereffektes auftretenden Frequenzverschiebung Messwerte zur Peilmessung bzw. Zielrichtungsmessung gewonnen werden.

2. Vorrichtung zur Durchführung des Verfahrens nach Anspruch 1, **dadurch gekennzeichnet, dass** sie die Erweiterung eines AR-(Anti-Radiation)-Sensors ist und die HF-Stufen gemeinsam mit dem AR-Sensor verwendet.

3. Vorrichtung zur Durchführung des Verfahrens nach Anspruch 1, **dadurch gekennzeichnet, dass** sie als eigenständiger Sensor mit eigenen HF-Stufen ausgebildet ist.
